# EUROPÄISCHE PATENTSCHRIFT

(11) **EP 2 948 688 B1**
(45) Veröffentlichungstag und Bekanntmachung des Hinweises auf die Patenterteilung: **11.10.2017**
(21) Anmeldenummer: 14700073.1
(22) Anmeldetag: 06.01.2014
(51) Int. Cl.: F16C 19/38, F16C 19/54

(54) **ZYLINDERROLLENLAGER**
CYLINDRICAL ROLLER BEARING
ROULEMENT À ROULEAUX CYLINDRIQUES

(30) Priorität: 23.01.2013 DE 102013100679
(43) Veröffentlichungstag der Anmeldung: 02.12.2015
(73) Patentinhaber: thyssenkrupp Rothe Erde GmbH, 44137 Dortmund (DE)
(72) Erfinder: KAESLER, Andreas, 59597 Erwitte (DE); MALZER, Thomas, 59457 Werl (DE)
(74) Vertreter: thyssenkrupp Intellectual Property GmbH
(86) Internationale Anmeldenummer: PCT/EP2014/050100
(87) Internationale Veröffentlichungsnummer: WO 2014/114477

(56) Entgegenhaltungen:
- US-A- 4 126 361
- US-A1- 2008 169 257

## Beschreibung

Die Erfindung betrifft ein Zylinderrollenlager zur Aufnahme von Axial- und Radialkräften mit einem ersten Lagerring und einem zweiten Lagerring, die konzentrisch um eine in axialer Richtung verlaufende Drehachse angeordnet sind, wobei der zweite Lagerring eine in radialer Richtung offene Nut aufweist, in welche eine Nase des ersten Lagerrings eingreift, wobei zwischen der Nase und der Nut eine erste Radiallagerreihe und zwei in axialer Richtung beabstandete Axiallagerreihen angeordnet sind, wobei die erste Radiallagerreihe den ersten Lagerring in einer ersten radialen Richtung gegen den zweiten Lagerring abstützt und wobei eine zweite Lagerreihe vorgesehen ist, welche den ersten Lagerring gegenüber dem zweiten Lagerring in einer zweiten radialen Richtung abstützt, die der ersten radialen Richtung entgegengesetzt ist. Das Zylinderrollenlager ist insbesondere als kombiniertes Axial-Radiallager für die Lagerung von Rotorblättern an einer Windkraftanlage vorgesehen. Entsprechende Wälzlager werden in der Praxis auch als Flügelverstelllager bezeichnet.

Bekannte Windkraftanlagen weisen gemäß ihrem üblichen Aufbau einen Turm auf, an dessen oberen Ende ein Generator mit einem Generatorgehäuse angeordnet ist. An dem Generator ist direkt oder über ein Getriebe ein Rotor angeschlossen, der typischerweise drei Rotorblätter trägt. Um die Stellung der Rotorblätter an unterschiedliche Windgeschwindigkeiten anzupassen, sind diese um eine Rotorblattlängsachse drehbar an den Rotor angeschlossen. Hierzu werden Axial-Radialgroßwälzlager als Flügelverstelllager eingesetzt (Erich Hau, "Windkraftanlagen - Grundlagen, Technik, Einsatz, Wirtschaftlichkeit", 2. Auflage, 1996, S. 233-234). Die Aufgabe dieser Lager und einer zugeordneten Stellanordnung ist es, den Anstellwinkel des zugeordneten Rotorblattes an die jeweilige Windgeschwindigkeit bzw. den Betriebszustand der Anlage anzupassen.

Aus der DE 10 2011 000 769 A1 ist ein Axial-Radialwälzlager bekannt, welches insbesondere für die Lagerung von Rotorblättern an einer Windkraftanlage geeignet ist und welches sich bei einer kompakten Bauweise durch eine große Tragfähigkeit auszeichnet. Zur radialen Abstützung ist zwischen einem Innenring und einem Außenring eine Radiallagerreihe in herkömmlicher Weise angeordnet.

Im Hinblick auf die radiale Abstützung ähnlich konstruierte Zylinderrollenlager sind aus der DE 30 34 008 C2 sowie der EP 0 413 119 B1 bekannt. Die radiale Lagerung erfolgt durch eine Radiallagerreihe, welche zwischen einem Innenring und einem Außenring angeordnet ist. Einer der Lagerringe umfasst eine in radialer Richtung offene Nut. Wenn es sich dabei um den Außenring handelt, ist die Nut in radialer Richtung nach innen hin zu der Drehachse geöffnet. Wenn dagegen der Innenring mit der Nut versehen ist, ist diese in radialer Richtung nach außen geöffnet. Der jeweils andere Lagerring weist eine Nase auf, welche in die Nut eingreift. Ein solcher Ring wird in der Praxis auch als Nasenring bezeichnet. Die erste Radiallagerreihe ist an einer radial umlaufenden Spitze der Nase angeordnet, während zwei in axialer Richtung beabstandete Axiallagerreihe an den seitlichen Flanken der Nase vorgesehen sind. Der Innenring wird bei einer solchen Konstruktion über die Radiallagerreihe nach außen gegen den Außenring abgestützt.

Abhängig von dem Einsatz des Zylinderrollenlagers können erhebliche Kräfte auftreten, die auch in gewissem Maße eine Verformung des Lagers bzw. der zusammenwirkenden Lagerringe bewirken können. Gerade bei Flügelverstelllagern können bei ungünstiger Steifigkeit der Anschlusskonstruktion die im Betrieb auftretenden Kräfte die Lagerringe derart elastisch verformen, dass diese nicht mehr eine Kreisform aufweisen. Diese unter Belastung auftretende Verformung wird auch als Ovalisierung bezeichnet. Bei einem herkömmlichen Zylinderrollenlager mit lediglich einer Radiallagerreihe kann sich der Innenring durch eine solche Verformung lokal von dem Außenring wegbewegen, so dass an diesem Umfangsabschnitt die Zylinderrollen als Wälzkörper nicht mehr zu einer Abstützung beitragen, während in anderen Bereichen des Umfanges erhöhte Zwängungen und Druckbelastungen auftreten.

Um davon ausgehend eine gleichmäßigere Kraftverteilung zu erreichen und der beschriebenen Verformung der Lagerringe entgegenzuwirken, ist aus der EP 2 092 204 B1 ein Zylinderrollenlager mit den Merkmalen des Oberbegriffes des Patentanspruches 1 bekannt. Einer der beiden Laufringe umfasst einen Nasenring, wobei der andere Laufring einen Vorsprung aufweist, der den Nasenring umgreift. Dadurch wird eine Konstruktion ermöglicht, gemäß welcher der Nasenring nicht nur in axialer Richtung sondern auch in radialer Richtung durch jeweils zwei gegenüberliegende Reihen von Zylinderrollen geführt ist. Durch die beidseitige Führung können die Ringe in radialer Richtung nicht mehr unterschiedlich zueinander verformt werden, so dass die gesamte Konstruktion sich durch eine erhöhte Festigkeit auszeichnet, wobei die Laufringe sich auch nicht bereichsweise in radialer Richtung voneinander lösen können.

Als Nachteil ergibt sich jedoch, dass insbesondere in radialer Richtung ein erheblicher Bauraum für die Anordnung des Nasenringes notwendig ist. Die US2008/0169257, zeigt auf Figur 7 einen Vorschlag mit reduzierten Bauraum, wobei die Montage auswendig wird. Vor diesem Hintergrund liegt der vorliegenden Erfindung die Aufgabe zugrunde, ein Zylinderrollenlager anzugeben, bei dem eine unterschiedliche Verformung der zusammenwirkenden Lagerringe in radialer Richtung bei einer kompakten Bauform vermieden wird und gleichzeitig einfach zu montieren ist. Gegenstand der Erfindung und Lösung der Aufgabe ist ein Zylinderrollenlager gemäß Patentanspruch 1.

Die Erfindung betrifft damit ein Zylinderrollenlager, insbesondere ein Großwälzlager für die Lagerung von Rotorblättern, zur Aufnahme von Axial- und Radialkräften mit einem ersten Lagerring und einem zweiten Lagerring, die konzentrisch um eine in axialer Richtung verlaufende Drehachse angeordnet sind, wobei der zweite Lagerring eine in radialer Richtung offene Nut aufweist. Der erste Lagerring und der zweite Lagerring bilden Innenring und Außenring, wobei die Zuordnung gemäß den jeweiligen Anforderungen unterschiedlich gewählt werden kann.

Wenn der zweite Lagerring als Außenring vorgesehen ist, ist die Nut entsprechend in radialer Richtung nach innen zu der Drehachse hin offen. Wenn der zweite Lagerring dagegen den Innenring bildet, ist die Nut entsprechend in radialer Richtung nach außen hin von der Drehachse weg geöffnet.

Der erste Lagerring weist eine Nase auf, welche in die Nut eingreift, wobei zwischen der Nase und der Nut eine Radiallagerreihe und zwei in axialer Richtung beabstandete Axiallagerreihen angeordnet sind. Die erste Radiallagerreihe befindet sich an einer radial umlaufenden Spitze der Nase, wobei die Zylinderrollen als Wälzkörper der ersten Radiallagerreihe auch in die Nase eingesetzt werden können, um den Platzbedarf des Zylinderrollenlagers in radialer Richtung weiter zu minimieren.

Die zwei in axialer Richtung beabstandeten Axiallagerreihen mit Zylinderrollen sind an seitlichen Flanken der Nase angeordnet. Die erste Radiallagerreihe stützt den ersten Lagerring in einer ersten radialen Richtung gegen den zweiten Lagerring ab, wobei auch eine zweite Radiallagerreihe mit Zylinderrollen vorgesehen ist, welche den ersten Lagerring gegenüber dem zweiten Lagerring in einer zweiten radialen Richtung abstützt, die der ersten Radialrichtung entgegengesetzt ist. Erfindungsgemäß ist der erste Lagerring in axialer Richtung in zumindest einen ersten Teilring mit der Nase und einen zweiten Teilring geteilt, wobei die zweite Radiallagerreihe in einem axialen Abstand zu der Nase zwischen dem zweiten Teilring und dem zweiten Lagerring angeordnet ist.

Anders als bei den aus dem Stand der Technik bekannten dreireihigen Zylinderrollenlagern (DE 30 34 008 C2) sind der erste Lagerring und der zweite Lagerring in radialer Richtung nach innen und nach außen gegeneinander abgestützt, so dass eine unterschiedliche Verformung ausgeschlossen ist. Anders als bei der gattungsbildenden EP 2 092 204 B1 sind die beiden eine gegenläufige radiale Abstützung bewirkenden Radiallagerreihen nicht an der gleichen Ausformung nach Art einer Nase in unmittelbarer Nähe zueinander sondern mit einem axialen Abstand an unterschiedlichen Teilringen angeordnet. Dadurch ist es möglich, den in radialer Richtung notwendigen Bauraum erheblich zu reduzieren. Zusätzlich können auch der erste Lagerring und der zweite Lagerring ohne Weiteres mit Durchgangslöchern versehen werden, die einen einfachen Anschluss des Zylinderrollenlagers an die drehbar miteinander zu verbindenden Teile ermöglichen.

Gemäß einer bevorzugten Ausgestaltung der Erfindung ist vorgesehen, dass der zweite Teilring und der zweite Lagerring jeweils einen Vorsprung aufweisen, wobei sich die Vorsprünge in axialer Richtung und in radialer Richtung hintergreifen und wobei die zweite Radiallagerreihe zwischen den Vorsprüngen angeordnet ist. Insbesondere können die Vorsprünge jeweils eine L-Form mit einem radialen Schenkel und einem freien axialen Schenkel aufweisen. Damit sich dann die Vorsprünge mit ihren freien Schenkeln in axialer Richtung und in radialer Richtung übergreifen können, ist an dem jeweils komplementären Lagerring zweckmäßigerweise eine in axialer Richtung offene Nut vorgesehen.

Erfindungsgemäß ist der erste Lagerring mit der Nase in axialer Richtung in zumindest zwei Teilringe geteilt. Üblicherweise ist auch der zweite Lagerring im Bereich der Nut in axialer Richtung geteilt, um die Nase in der Nut positionieren und die um die Nase angeordneten Zylinderrollen montieren zu können. Grundsätzlich können der erste Lagerring und der zweite Lagerring auch mehr als jeweils zwei in axialer Richtung aufeinanderfolgende Teilringe aufweisen, um beispielsweise mehr als zwei Axiallagerreihen anordnen zu können. Auch eine Ausgestaltung mit mehr als zwei Axiallagerreihen (vgl. DE 10 2011 000 769 A1) ist im Rahmen der Erfindung möglich.

Gemäß einer bevorzugten Ausgestaltung ist bei einer zumindest zweiteiligen Ausgestaltung des ersten Lagerringes vorgesehen, dass der zweite Teilring in axialer Richtung eine Stirnfläche des Zylinderrollenlagers bildet. Bei der Montage wird dann der zweite Teilring in axialer Richtung auf den ersten Teilring und mit seinem Vorsprung in eine zugeordnete Vertiefung bzw. in axialer Richtung offene Nut an der Stirnfläche des zweiten Lagerrings eingesetzt, wobei dort zuvor die Zylinderrollen der zweiten Radiallagerreihe anzuordnen sind.

Dadurch, dass die zweite Radiallagerreihe in einem axialen Abstand zu der Nase angeordnet ist, ist wie bereits zuvor erläutert, eine kompakte Bauweise möglich. Insbesondere kann vorgesehen sein, dass die zweite Lagerreihe in radialer Richtung nicht über den Bereich vorsteht, in dem die Axiallagerreihen und die erste Axiallagerreihe angeordnet sind. Besonders bevorzugt steht die zweite Radiallagerreihe in radialer Richtung nicht über die Axiallagerreihen vor. In einer Schnittdarstellung in radialer Richtung ist demnach die zweite Radiallagerreihe oberhalb oder unterhalb der Axiallagerreihen angeordnet. In radialer Richtung ergibt sich dadurch kein zusätzlicher Platzbedarf für die Anordnung der zweiten Radialreihe. Dabei ist zu berücksichtigen, dass bei vielen Anwendungen eine Verlängerung des Zylinderrollenlagers in axialer Richtung ohne Weiteres möglich ist, während in radialer Richtung eine möglichst kompakte Bauform von Vorteil ist.

Da der Platzbedarf für die Anordnung der Axiallagerreihen und Radiallagerreihen in radialer Richtung minimiert ist, können der erste Lagerring und/oder der zweite Lagerring jeweils um den Umfang verteilte Durchgangslöcher für Befestigungsschrauben aufweisen.

Wie bereits zuvor erläutert, kann der erste Lagerring einen Innenring oder einen Außenring bilden, wobei dann der zweite Lagerring entsprechend den zugeordneten Außenring bzw. Innenring bildet. Des Weiteren kann der erste Lagerring oder der zweite Lagerring radiale Zuführungskanäle für Schmiermittel aufweisen. In der Regel ist es ausreichend, wenn lediglich einer der beiden Lagerringe mit entsprechenden Zuführungskanälen versehen ist, wobei eine Zuführung von Schmiermittel von innen oder von außen im Einzelfall abhängig von der Zugänglichkeit ausgewählt werden kann.

Schließlich ist es auch möglich, einen der beiden Lagerringe oder beide Lagerringe um den gesamten Umfang oder um einen Teil des Umfanges mit einer Verzahnung zu versehen.

Die Erfindung wird im Folgenden anhand einer lediglich ein Ausführungsbeispiel darstellenden Zeichnung erläutert. Es zeigen:
- **Fig. 1**: ein erfindungsgemäßes Zylinderrollenlager,
- **Fig. 2 und 3**: Varianten des erfindungsgemäßen Zylinderrollenlagers.

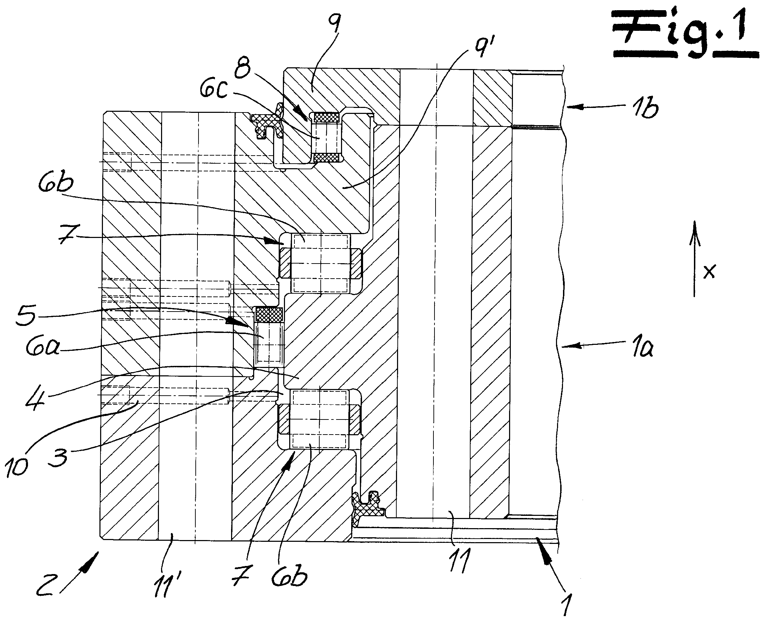

Die Fig. 1 zeigt ein erfindungsgemäßes Zylinderrollenlager zur Aufnahme von Axial- und Radialkräften, welches insbesondere als Flügelverstelllager an einer Windkraftanlage vorgesehen ist, um dort die einzelnen Flügel um eine Flügellängsachse drehbar mit einem Rotor zu verbinden.

Das Zylinderrollenlager weist einen ersten Lagerring 1 und einen zweiten Lagerring 2 auf, die konzentrisch um eine in axialer Richtung x verlaufende Drehachse angeordnet sind.

In dem Ausführungsbeispiel der Fig. 1 bildet der erste Lagerring 1 einen Innenring und der zweite Lagerring 2 einen Außenring, wobei ohne Einschränkung eine umgekehrte Zuordnung des ersten Lagerrings 1 und des zweiten Lagerrings 2 möglich ist.

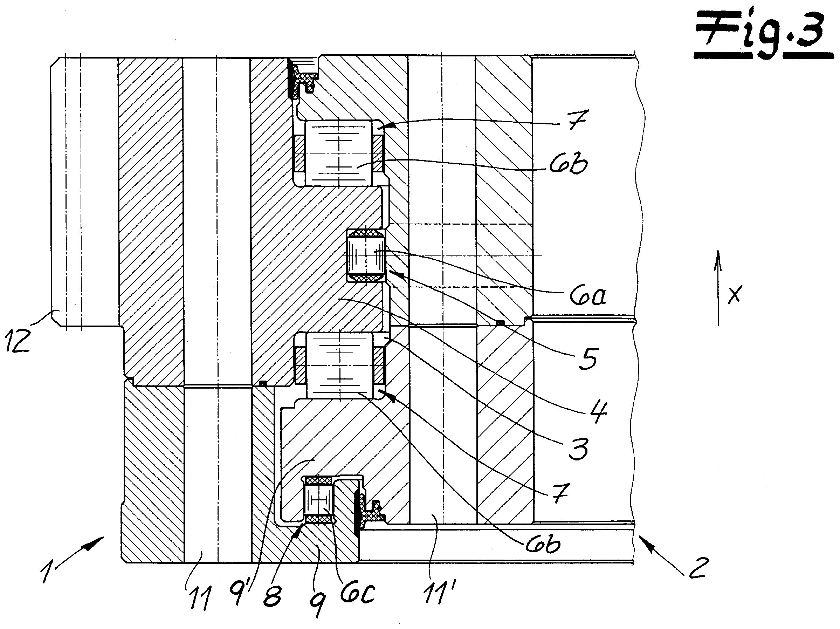

Der zweite Lagerring 2 weist eine in radialer Richtung offene Nut 3 auf. Bei der Ausgestaltung gemäß der Fig. 1, bei welcher der zweite Lagerring 2 den Außenring bildet, ist die Nut 3 in radialer Richtung nach innen zu der Drehachse hin geöffnet. In die Nut 3 des zweiten Lagerrings 2 greift eine Nase 4 des ersten Lagerrings 1 ein. Zwischen der Nase 4 und der Nut 3 ist eine erste Radiallagerreihe 5 mit Zylinderrollen 6a angeordnet. Die Zylinderrollen 6a sind dabei in einer weiteren Vertiefung der Nut 3 angeordnet. Alternativ kann eine entsprechende Vertiefung auch in der Nase 4 vorgesehen sein (vgl. Fig. 3). Schließlich ist auch eine Kombination möglich, bei der jeweils eine Vertiefung geringerer Höhe sowohl in der Nase 4 als auch in dem Bereich der Nut 3 vorgesehen ist.

An den seitlichen Flanken der Nase 4 sind in einem axialen Abstand zueinander zwei Axiallagerreihen 7 mit Zylinderrollen 6b angeordnet, wobei die erste Radiallagerreihe 5 den ersten Lagerring 1 als Innenring nach außen in einer ersten radialen Richtung gegen den zweiten Lagerring 2 als Außenring abstützt.

Erfindungsgemäß ist in einem axialen Abstand zu der Nase 4 eine zweite Radiallagerreihe 8 mit Zylinderrollen 6c vorgesehen, die in entgegengesetzter Richtung wirkt. Während der erste Lagerring 1 als Innenring bei einer Verformung durch die erste Radiallagerreihe 5 begrenzt ist, bewirkt die zweite Radiallagerreihe 8, dass sich der erste Lagerring auch nicht bereichsweise nach innen von dem zweiten Lagerring 2 als Außenring trennen kann.

Der erste Lagerring 1 ist in axialer Richtung in einen ersten Teilring 1a mit der Nase 4 und einen zweiten Teilring 1b geteilt, wobei die zweite Radiallagerreihe 8 an dem zweiten Teilring 1b des ersten Lagerringes 1 angeordnet ist. Der zweite Teilring 1b und der zweite Lagerring 2 weisen jeweils einen L-förmigen Vorsprung 9, 9' auf, wobei freie Enden der Vorsprünge 9, 9' sich sowohl in axialer Richtung x als auch in radialer Richtung hintergreifen und einen Zwischenraum für die Zylinderrollen 6c der zweiten Lagerreihe 8 bilden. Durch die zweite Lagerreihe 8 ist also der erste Lagerring 1, der in der Ausführungsform gemäß der Fig. 1 den Innenring bildet, in radialer Richtung R nach innen gegen den zweiten Lagerring 2 abgestützt. Die beiden Lagerringe 1, 2 können sich durch die doppelte radiale Abstützung in entgegengesetzter Richtung nicht unkontrolliert verformen. Insbesondere das Problem einer sogenannten Ovalisierung, bei der die beiden Lagerringe 1, 2 in unterschiedlicher Weise verbogen werden und ihre Kreisform verlieren, kann dadurch beseitigt werden.

Der Fig. 1 ist des Weiteren zu entnehmen, dass auch der zweite Lagerring 2 in axialer Richtung x zweigeteilt ist, um die Anordnung der ersten Radiallagerreihe 5 sowie der beiden Axiallagerreihen 7 im Bereich der Nase 4 zu ermöglichen. Die Teilung des zweiten Lagerringes 2 erfolgt dabei im Bereich der Nut 3, wobei jedoch zweckmäßigerweise eine Teilung außerhalb einer Lauffläche der Zylinderrollen 6a der ersten Radiallagerreihe 5 vorgesehen ist.

Die Zylinderrollen 6a, 6b, 6c der ersten Lagerreihe 5, die Axiallagerreihen 7 sowie der zweiten Radiallagerreihe 8 sind in üblicher Weise in Käfigen geführt. Darüber hinaus sind in der Fig. 1 Zuführungskanäle 10 für Schmiermittel angedeutet. Die Zuführungskanäle 10 sind exemplarisch in dem zweiten Lagerring 2 dargestellt, wobei grundsätzlich auch der erste Lagerring 1 oder beide Lagerringe 1, 2 je nach Zugänglichkeit mit Zuführungskanälen 10 versehen sein können.

Aus der Fig. 1 ist ersichtlich, dass die zweite Radiallagerreihe 8 oberhalb der beiden Axiallagerreihen 7 angeordnet ist und in radialer Richtung nicht über die Ausdehnung der beiden Axiallagerreihen 7 vorsteht. Der in radialer Richtung notwendige Platzbedarf kann damit minimiert werden.

Darüber hinaus können auch beide Lagerringe 1, 2 mit Durchgangslöchern 11, 11' versehen werden, welche die Befestigung der beiden drehbar miteinander zu verbindenden Teile ermöglichen.

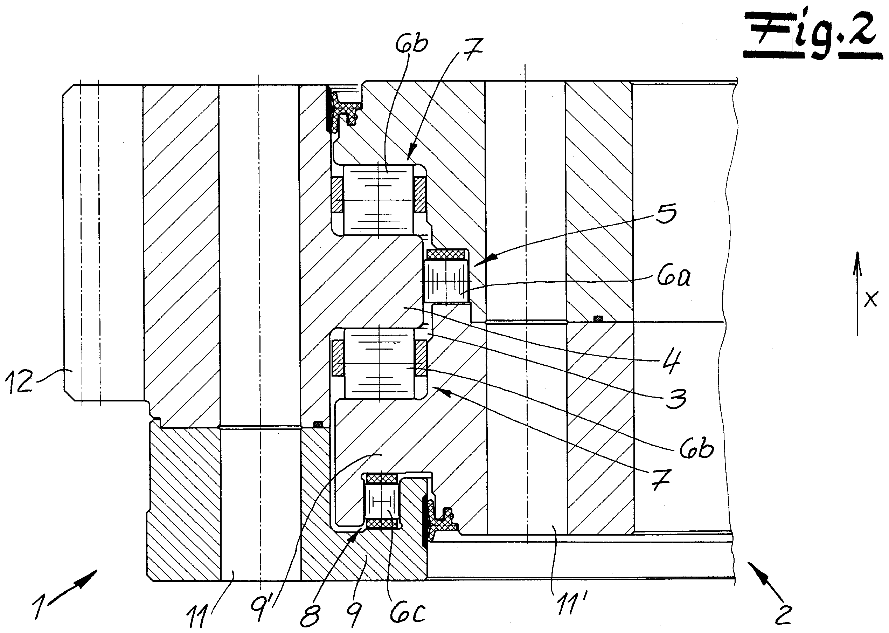

Die Fig. 2 zeigt eine alternative Ausgestaltung des Zylinderrollenlagers, welches in seinem grundsätzlichen Aufbau der Ausgestaltung der Fig. 1 entspricht. Als Unterschied ergibt sich, dass der erste Lagerring 1 den Außenring und der zweite Lagerring 2 den Innenring bildet. Zusätzlich ist zu erkennen, dass an dem ersten Lagerring 1 als Außenring eine Verzahnung 12 vorhanden ist. Eine entsprechende Verzahnung kann zusätzlich oder alternativ auch an dem zweiten Lagerring 2 vorhanden sein.

Die Ausgestaltung der Fig. 3 unterscheidet sich von der Ausgestaltung gemäß der Fig. 2 dadurch, dass die Zylinderrollen 6a der ersten Radiallagerreihe 5 in eine Vertiefung der Nase 4 eingesetzt sind, so dass der Platzbedarf für das Zylinderrollenlager in radialer Richtung noch weiter reduziert ist.

## Patentansprüche

1. Zylinderrollenlager zur Aufnahme von Axial- und Radialkräften mit einem ersten Lagerring (1) und einem zweiten Lagerring (2), die konzentrisch um eine in axialer Richtung (x) verlaufende Drehachse angeordnet sind, wobei der zweite Lagerring (2) eine in radialer Richtung offene Nut (3) aufweist, in welche eine Nase (4) des ersten Lagerrings (1) eingreift, wobei zwischen der Nase (4) und der Nut (3) eine erste Radiallagerreihe (5) und zwei in axialer Richtung beabstandete Axiallagerreihen (7) angeordnet sind, wobei die erste Radiallagerreihe (5) den ersten Lagerring (1) in einer ersten radialen Richtung gegen den zweiten Lagerring (2) abstützt und wobei eine zweite Radiallagerreihe (8) vorgesehen ist, welche den ersten Lagerring (1) gegenüber dem zweiten Lagerring (2) in einer zweiten radialen Richtung abstützt, die der ersten radialen Richtung entgegengesetzt ist, **dadurch gekennzeichnet, dass** der erste Lagerring (1) in axialer Richtung (x) in zumindest einen ersten Teilring (1a) mit der Nase (4) und einen zweiten Teilring (1b) geteilt ist, wobei die zweite Radiallagerreihe (8) mit einem axialen Abstand zu der Nase (4) zwischen dem zweiten Teilring (1b) und dem zweiten Lagerring (2) angeordnet ist, und wobei die zweite Radiallagerreihe (8) oberhalb oder unterhalb der Axiallagerreihen (7) derart angeordnet ist, dass sie in radialer Richtung nicht über die Axiallagerreihen (7) vorsteht.

2. Zylinderrollenlager nach Anspruch 1, **dadurch gekennzeichnet, dass** der zweite Teilring (1b) und der zweite Lagerring (2) jeweils einen Vorsprung (9, 9') aufweisen, wobei sich die Vorsprünge (9, 9') in axialer Richtung (x) und in radialer Richtung hintergreifen und wobei die zweite Radiallagerreihe (8) zwischen den Vorsprüngen (9, 9') angeordnet ist.

3. Zylinderrollenlager nach Anspruch 2, **dadurch gekennzeichnet, dass** die Vorsprünge (9, 9') jeweils eine L-Form mit einem radialen Schenkel und einem freien axialen Schenkel aufweisen.

4. Zylinderrollenlager nach einem der Ansprüche 1 bis 3, **dadurch gekennzeichnet, dass** der zweite Teilring (1b) in axialer Richtung (x) eine Stirnfläche des Zylinderrollenlagers bildet.

5. Zylinderrollenlager nach einem der Ansprüche 1 bis 4, **dadurch gekennzeichnet, dass** der zweite Lagerring (2) im Bereich der Nut (3) in axialer Richtung (x) geteilt ist.

6. Zylinderrollenlager nach einem der Ansprüche 1 bis 5, **dadurch gekennzeichnet, dass** der erste Lagerring (1) und der zweite Lagerring (2) jeweils um den Umfang verteilte Durchgangslöcher (11, 11') für Befestigungsschrauben aufweisen.

7. Zylinderrollenlager nach einem der Ansprüche 1 bis 6, **dadurch gekennzeichnet, dass** der erste Lagerring (1) einen Innenring und der zweite Lagerring (2) einen Außenring bilden.

8. Zylinderrollenlager nach einem der Ansprüche 1 bis 7, **dadurch gekennzeichnet, dass** der erste Lagerring (1) und/oder der zweite Lagerring (2) radiale Zuführungskanäle (10) für Schmiermittel aufweisen.

## Claims

1. Cylindrical roller bearing for absorbing axial and radial forces having a first bearing ring (1) and a second bearing ring (2) which are arranged concentrically about a rotational axis which runs in the axial direction (x), the second bearing ring (2) having a groove (3) which is open in the radial direction and into which a lug (4) of the first bearing ring (1) engages, a first radial bearing row (5) and two axial bearing rows (7) which are spaced apart in the axial direction being arranged between the lug (4) and the groove (3), the first radial bearing row (5) supporting the first bearing ring (1) in a first radial direction against the second bearing ring (2), and a second radial bearing row (8) being provided which supports the first bearing ring (1) with respect to the second bearing ring (2) in a second radial direction which is opposed to the first radial direction, **characterized in that** the first bearing ring (1) is divided in the axial direction (x) into at least one first part ring (1a) with the lug (4) and a second part ring (1b), the second radial bearing row (8) being arranged at an axial spacing from the lug (4) between the second part ring (1b) and the second bearing ring (2), and the second radial bearing row (8) being arranged above or below the axial bearing rows (7) in such a way that it does not project in the radial direction beyond the axial bearing rows (7).

2. Cylindrical roller bearing according to Claim 1, **characterized in that** the second part ring (1b) and the second bearing ring (2) in each case have a projection (9, 9'), the projections (9, 9') engaging behind one another in the axial direction (x) and in the radial direction, and the second radial bearing row (8) being arranged between the projections (9, 9').

3. Cylindrical roller bearing according to Claim 2, **characterized in that** the projections (9, 9') in each case have an L-shape with a radial leg and a free axial leg.

4. Cylindrical roller bearing according to one of Claims 1 to 3, **characterized in that** the second part ring (1b) forms an end face of the cylindrical roller bearing in the axial direction (x).

5. Cylindrical roller bearing according to one of Claims 1 to 4, **characterized in that** the second bearing ring (2) is split in the axial direction (x) in the region of the groove (3).

6. Cylindrical roller bearing according to one of Claims 1 to 5, **characterized in that** the first bearing ring (1) and the second bearing ring (2) in each case have through holes (11, 11') which are distributed about the circumference for fastening bolts.

7. Cylindrical roller bearing according to one of Claims 1 to 6, **characterized in that** the first bearing ring (1) forms an inner ring and the second bearing ring (2) forms an outer ring.

8. Cylindrical roller bearing according to one of Claims 1 to 7, **characterized in that** the first bearing ring (1) and/or the second bearing ring (2) have/has radial feed ducts (10) for lubricant.

## Revendications

1. Roulement à rouleaux cylindriques pour absorber des forces axiales et radiales avec une première bague de roulement (1) et une deuxième bague de roulement (2) disposées concentriquement autour d'un axe de rotation s'étendant dans la direction axiale (x), la deuxième bague de roulement (2) comportant une rainure (3) ouverte dans la direction radiale dans laquelle s'engrène un bec (4) de la première bague de roulement (1), une première rangée de roulements radiale (5) et deux rangées de roulements axiales (7) placées à une certaine distance dans la direction axiale étant disposées entre le bec (4) et la rainure (3), la première rangée de roulements radiale (5) maintenant la première bague de roulement (1) dans une première direction radiale contre la deuxième bague de roulement (2) et une deuxième rangée de roulements radiale (8) étant prévue, celle-ci maintenant la première bague de roulement (1) par rapport à la deuxième bague de roulement (2) dans une deuxième direction radiale opposée à la première direction radiale opposée à la première direction radiale, **caractérisé en ce que** la première bague de roulement (1) est divisée dans la direction axiale (x) en au moins une première bague partielle (1a) avec le bec (4) et une deuxième bague partielle (1b), la deuxième rangée de roulements radiale (8) étant disposée à une certaine distance axiale du bec (4) entre la deuxième bague partielle (1b) et la deuxième bague de roulement (2) et la deuxième rangée de roulements radiale (8) étant disposée au-dessus ou en dessous des rangées de roulements axiales (7) de façon à ne pas dépasser, dans la direction radiale, au-delà des rangées de roulements axiales (7).

2. Roulement à rouleaux cylindriques selon la revendication 1, **caractérisé en ce que** la deuxième bague partielle (1b) et la deuxième bague de roulement (2) comportent respectivement une saillie (9, 9'), les saillies (9, 9') s'engrenant par l'arrière dans la direction axiale (x) et dans la direction radiale et la deuxième rangée de roulements radiale (8) étant disposée entre les saillies (9, 9').

3. Roulement à rouleaux cylindriques selon la revendication 2, **caractérisé en ce que** les saillies (9, 9') prennent respectivement une forme de L avec un côté radial et un côté axial libre.

4. Roulement à rouleaux cylindriques selon l'une quelconque des revendications 1 à 3, **caractérisé en ce que** la deuxième bague partielle (1b) forme dans la direction axiale (x) une surface avant du roulement à rouleaux cylindriques.

5. Roulement à rouleaux cylindriques selon l'une quelconque des revendications 1 à 4, **caractérisé en ce que** la deuxième bague de roulement (2) est coupée dans la direction axiale (x) dans la région de la rainure (3) .

6. Roulement à rouleaux cylindriques selon l'une quelconque des revendications 1 à 5, **caractérisé en ce que** la première bague de roulement (1) et la deuxième bague de roulement (2) comportent respectivement des trous traversants (11, 11') pour vis de fixation répartis autour de la périphérie.

7. Roulement à rouleaux cylindriques selon l'une quelconque des revendications 1 à 6, **caractérisé en ce que** la première bague de roulement (1) forme une bague intérieure et que la deuxième bague de roulement (2) forme une bague extérieure.

8. Roulement à rouleaux cylindriques selon l'une quelconque des revendications 1 à 7, **caractérisé en ce que** la première bague de roulement (1) et/ou la deuxième bague de roulement (2) comportent des canaux d'alimentation (10) radiaux pour le moyen lubrifiant.
